Europäisches Patentamt

**European Patent Office**

Office européen des brevets

(19)

(11) Numéro de publication: **0 025 387 B1**

(12) **FASCICULE DE BREVET EUROPEEN**

(45) Date de publication du fascicule du brevet: 14.03.84

(51) Int. Cl.³: **B 29 D 17/00**, G 11 B 3/70

(21) Numéro de dépôt: **80401241.7**

(22) Date de dépôt: **29.08.80**

(54) **Dispositif de moulage de disques porteurs d'informations.**

(30) Priorité: **06.09.79 FR 7922300**

(43) Date de publication de la demande: **18.03.81 Bulletin 81/11**

(45) Mention de la délivrance du brevet: **14.03.84 Bulletin 84/11**

(84) Etats contractants désignés: **DE GB IT NL SE**

(56) Documents cités:
**DE - B - 1 104 204**
**FR - A - 1 226 391**
**FR - A - 2 166 095**
**FR - A - 2 384 404**
**GB - A - 1 205 623**

(73) Titulaire: **THOMSON-CSF, 173, Boulevard Haussmann, F-75379 Paris Cedex 08 (FR)**

(72) Inventeur: **Antoine, Robert, THOMSON-CSF SCPI 173, bld Haussmann, F-75360 Paris Cedex 08 (FR)**
Inventeur: **Bricot, Claude, THOMSON-CSF SCPI 173, bld Haussmann, F-75360 Paris Cedex 08 (FR)**
Inventeur: **Robin, Gérard, THOMSON-CSF SCPI 173, bld Haussmann, F-75360 Paris Cedex 08 (FR)**

(74) Mandataire: **Wang, Pierre et al, THOMSON-CSF SCPI 173, Bld Haussmann, F-75379 Paris Cedex 08 (FR)**

## Dispositif de moulage de disques porteurs d'informations

L'invention concerne un dispositif de moulage de disques vidéo plus particulièrement selon une technique de moulage d'un substrat flexible sur une matrice porteuse d'informations sous la forme de micro-reliefs.

Des disques vidéo lisibles optiquement sont généralement tels que l'information est enregistrée selon une piste en spirale ou en forme de cercles concentriques, formée d'une succession d'éléments dont les dimensions sont de l'ordre du micron: cuvettes ou saillies selon le procédé. Des micro-cuvettes sont obtenues par exemple par ablation thermique.

Pour certaines applications, il peut être utile de disposer d'un nombre plus ou moins important de copies identiques obtenues à partir d'un même disque original: soit une matrice spécialement gravée et qui ne servira qu'à la duplication, soit un disque susceptible d'être enregistré et lu par l'utilisateur.

De nombreux procédés de copie sont déjà connus, notamment ceux faisant appel aux techniques de pressage, telles que celles utilisées pour les disques audio, qui nécessitent l'emploi pour les copies d'un matériau plastique thermodéformable. Les procédés de pressage bien adaptés à la production en série nécessitent un appareillage lourd, encombrant et coûteux qui n'est guère intéressant pour les petites séries et ne peut pas être employé par l'utilisateur lui-même.

Plus adaptés à la production de petite série sont les procédés de moulage consistant à mettre en contact une matrice et un substrat avec au moins un agent moulant intermédiaire. L'appareillage est alors plus léger, de mise en œuvre simple et de faible prix de revient, pouvant être installé dans un local quelconque, tel un appareil de reprographie par exemple, sur les lieux mêmes de l'utilisation. D'autre part, le moulage n'engendre pas de contraintes mécaniques au niveau de l'empreinte en relief et assure une meilleure fidélité de reproduction que le pressage. L'un des problèmes rencontrés est celui de l'inclusion de bulles d'air entre la matrice et le substrat. Un procédé de moulage de disque flexible (souple ou semirigide) est décrit dans le brevet français numéro 2 384 404, selon lequel une résine photopolymérisable est déposée en couronne au voisinage du centre de la matrice, le substrat flexible est galbé et appliqué contre la résine puis est aplati progressivement contre la matrice tout en chassant vers la périphérie la résine en évitant la formation de bulles d'air. La résine, qui forme alors une couche d'épaisseur uniforme entre le substrat et la matrice, est photopolymérisée par rayonnement ultra-violet à travers le substrat et adhère alors au substrat et non à la matrice. Les moyens de mise en œuvre de ce procédé, décrits dans cette demande, comprennent notamment un raccordement à une pompe à vide, afin de rendre le substrat galbé par application d'une dépression. Pour permettre l'application du substrat contre la matrice, on supprime la dépression, si bien que le substrat se détend et s'applatit sur la matrice. La mise en œuvre ainsi décrite est délicate. La pression exercée par le substrat sur la matrice, avec comme intermédiaire la couronne de résine, n'est pas contrôlée et est diffilement uniforme et progressive. D'autre part, il n'est pas prévu de moyens de réalisation d'un trou central, parfaitement positionné par rapport à la plage annulaire enregistrée.

L'invention a donc pour objet un dispositif de moulage de disques porteurs d'informations sous la forme de micro-reliefs superficiels de type vidéo et constitués d'un disque substrat et d'une couche de résine portant des micro-reliefs, mettant en œuvre l'étalement d'un bourrelt de résine fluide entre un disque matrice gravé et le disque substrat, comprenant des moyens permettant de déposer ce bourrelet de résine au centre de l'un des disques, des moyens d'étalement de la résine permettant d'appliquer le deuxième disque flexible contre la résine, ce deuxième disque étant tout d'abord galbé puis aplati progressivement contre le premier en chassant la résine vers la périphérie selon un front circulaire, des moyens permettant de durcir la couche de résine ainsi formée entre les deux disques, et des moyens d'appui pour la périphérie du deuxième disque en forme de couronne de diamètre intérieur supérieur au diamètre extérieur du premier disque, le deuxième disque ayant un diamètre extérieur supérieur au diamètre intérieur de la couronne; les moyens d'étalement comprenant un élément élastique déformable exerçant une poussée progressive sur le deuxième disque, cet élément déformable étant situé du côté opposé au premier disque par rapport au deuxième et mobile dans une direction, perpendiculaire au premier disque; ce premier disque étant disposé sur un plateau; caractérisé en ce qu'il comprend en outre d'une part une gorge pratiquée dans le plateau recevant les moyens d'appui en forme de couronne de manière à rendre ceux-ci mobiles suivant la direction perpendiculaire au plan du premier disque, ces moyens d'appui donnant une forme initiale galbée, au deuxième disque, la gorge étant disposée au regard de la couronne pour laisser ladite couronne s'effacer progressivement au fur et à mesure de l'application du deuxième disque contre le premier, enfin à permettre la séparation des disques après durcissement de la résine; d'autre part un anneau central solidaire dudit élément élastique, ce dernier constitué d'un coussin en mousse alvéolaire ayant une face d'appui sur le deuxième disque convexe à l'état libre, l'anneau central de diamètre inférieur à celui de la couronne de résine exerçant un pinçage d'appui de façon à assurer les positionnements relatifs des deux disques pendant toute la durée de la phase d'étalement et en ce que ledit coussin élastique des moyens d'appui exerce la poussée progressive sur le deuxième disque en débutant dans la zone du bourrelet de résine puis en s'étendant vers la périphérie au fur et à mesure de l'effacement des moyens d'appui.

D'autres particularités et avantages de l'invention apparaîtront mieux à l'aide de la description ci-après et des dessins qui l'accompagnent où:

— les figures 1 à 6 illustrent les phases successives d'une opération de réalisation d'un disque à partir d'un substrat semi-rigide;

— la figure 7 représente une variante de l'appareil selon l'invention dans le cas de substrat souple.

Le principe d'une opération de moulage consiste à appliquer l'un contre l'autre opération de moulage consiste à appliquer l'un contre l'autre un disque original porteur de micro-reliefs de surface et un deuxième disque destiné à fournir le disque copie en insérant entre les deux disques une couche d'une substance durcissable Le disque original porte des pistes successives gravées par exemple par ablation thermique selon des micro-cuvettes. On désire obtenir un disque copie dont la surface constituée par la couche de la substance durcie reproduit le même relief en négatif, c'est-à-dire d'après l'exemple choisi, des micro-reliefs. Pour éviter l'interposition d'une couche d'un agent de démoulage entre le disque original et la substance durcissable, ce qui risque d'être préjudiciable localement à la qualité du micro-relief, on utilise une résine pouvant s'étaler facilement et qui, une fois durcie, n'adhère pas au disque original mais au contraire adhère au disque copie. La surface du disque original peut être en métal ou en matière synthétique. Le disque copie est réalisé dans un substrat en plastique par exemple en chlorure de polyvinyle, en plexiglas ou bien en verre. Outre ses qualités d'adhérence au substrat et non au disque original, la résine doit être aussi peu fragile que possible, c'est-à-dire surtout peu sensible à l'abrasion. Elle doit d'autre part ne pas engendrer de contraintes mécaniques dans le substrat, ce qui aboutirait à des déformations du disque copie. Pour obtenir les qualités requises, la résine choisie dans le cas d'un substrat en plastique, peut être une résine acrylique composée de monomères que l'on peut polymériser rapidement par irradiation sous un rayonnement ultra-violet. Le rayonnement peut être appliqué au travers de l'un des deux disques à condition que celui-ci l'absorbe peu. D'autres résines durcissables peuvent être utilisées, par exemple des résines composées d'élastomères silicones durcissables par chauffage au moyen par exemple d'une lampe infra-rouge.

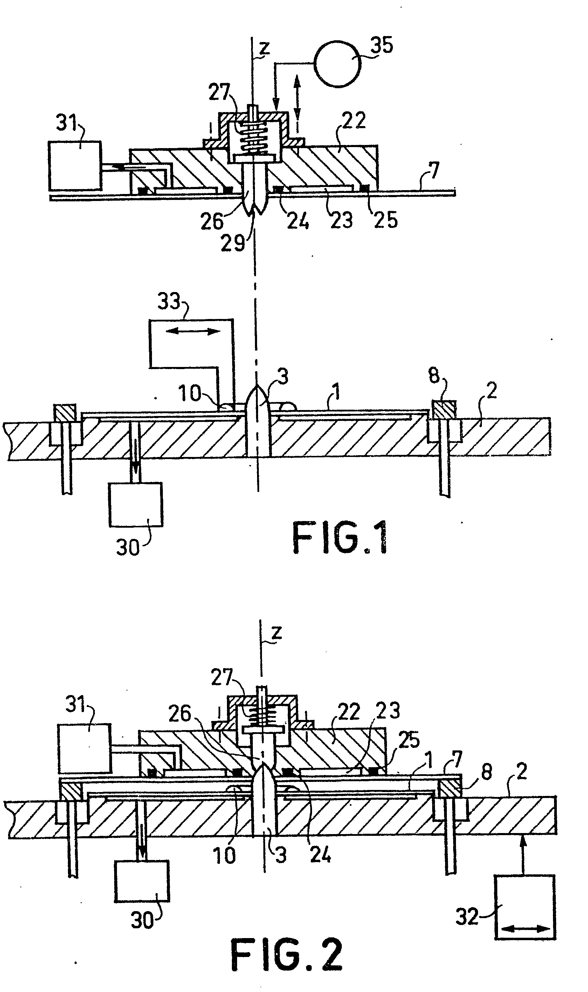

La figure 1 illustre la première étape d'une opération de copie au cours de laquelle les deux disques sont mis en place. L'un des deux disques, 1, généralement le disque original, est placé sur un plateau 2 muni d'un dispositif de dépression schématiquement représenté 30 assurant un maintien du disque 1 pendant toute la durée de la copie. Le disque 1 a été préalablement perforé en son centre d'un trou de diamètre prédéterminé parfaitement centré par rapport à la piste porteuse d'informations. Le plateau 2 est solidaire d'une broche centrale 3 dont les dimensions sont adaptées à celles du trou avec un jeu très réduit (environ 10 microns) sur laquelle se positionne le disque. Le deuxième disque 7, en général le substrat, a un diamètre légèrement supérieur à celui du premier disque de façon à empêcher ultérieurement un cheminement du surplus de résine sur la face du substrat non destinée à être gravée. Le disque 7 est perforé en son centre d'un trou calibré avec la broche 3 et maintenu par une ventouse 22 grâce à une chambre de dépression 23 associée à des moyens d'aspiration 31 et limitée par deux joints annulaires 24 et 25. La ventouse 22 est mobile verticalement par un moyen quelconque 35. Le trou du substrat 7 se positionne sur une broche 26 rétractable sous l'action d'un ressort 27. Le diamètre de cette broche est un peu plus faible que celui de la broche 3 du plateau 2. Le disque 7 solidaire de la ventouse 22 d'une part et le disque 1 solidaire du plateau 2 d'autre part, sont alignés l'un par rapport à l'autre de façon que les axes des broches 3 et 26 soient confondus en Z. De plus, l'extrémité de la broche 26 comporte un évidement 29 de forme conique permettant de parfaire l'alignement sur l'extrémité ogivale de la broche 3. Une fois que les disques 1 et 7 ont été mis en place, un dispositif à pompe de résine 33, mobile latéralement, vient déposer une quantité prédéterminée de résine sur la partie centrale de la matrice 1 suivant un bourrelet circulaire 10 situé légèrement en deçà de la zone minimale d'inscription. Le dispositif 33 comprend des moyens mécaniques permettant de répartir la résine de façon uniforme. Après cette opération le dispositif 33 est dégagé.

L'étape suivante est représenté sur la figure 2. La ventouse 22 supportant le substrat 7 descend avec celui-ci grâce aux moyens 35, et s'arrête lorsque la broche 26 s'engage sur la broche 3. Le diamètre du substrat 7 ayant été choisi légèrement supérieur à celui du disque 1, le substrat 7 vient s'appuyer sur une couronne 8 extérieure au disque 1 et surélevée par rapport au niveau du plateau 2 de façon que le substrat soit à qulques millimètres du bourrelet de résine 10. La broche 26 se rétracte dans la ventouse 22 grâce au ressort 27 et commande l'arrêt du dispositif de dépression 31. Les moyens 35 sont alors actionnés pour dégager la ventouse 22. Le plateau 2 supportant les deux disques 1 et 7 est alors déplacé latéralement grâce à un chariot 32 de façon à venir se positionner sous le dispositif d'étalement de la résine.

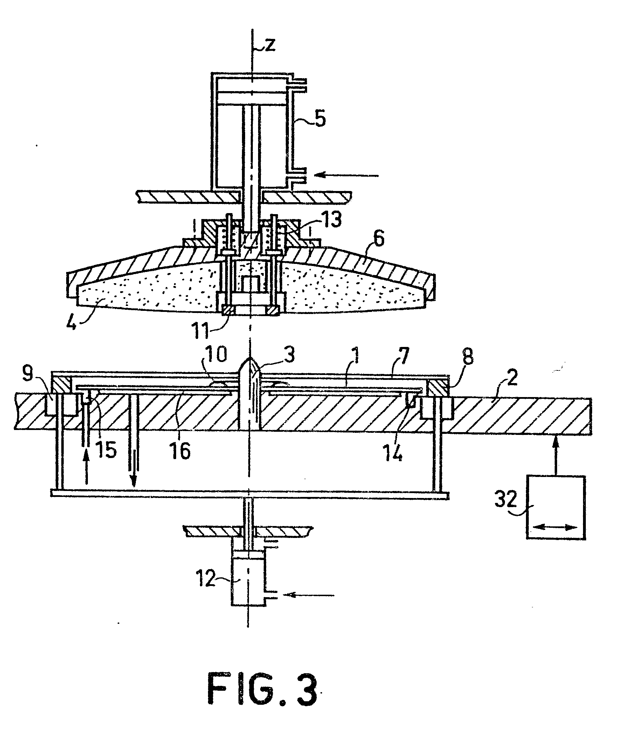

Ce dispositif est représenté sur la figure 3. Il comprend un coussin de mousse alvéolaire 4 formé par exemple de caoutchouc naturel ou d'élastomère dans l'axe de la broche centrale au dessus des disques 1 et 7. Un siège 6 de forme appropriée à la face cachée du coussin assure une bonne assise de celui-ci. La tenue du coussin sur son siège est fait par serrage ou collage. Le coussin a une forme lenticulaire obtenue de préférence par moulage et il est conçu pour transmettre une pression uniforme sur le substrat dans la zone d'inscription. L'ensemble du siège et du coussin est maintenu au dessus du disque 1 à l'aide d'un vérin à double effet 5.

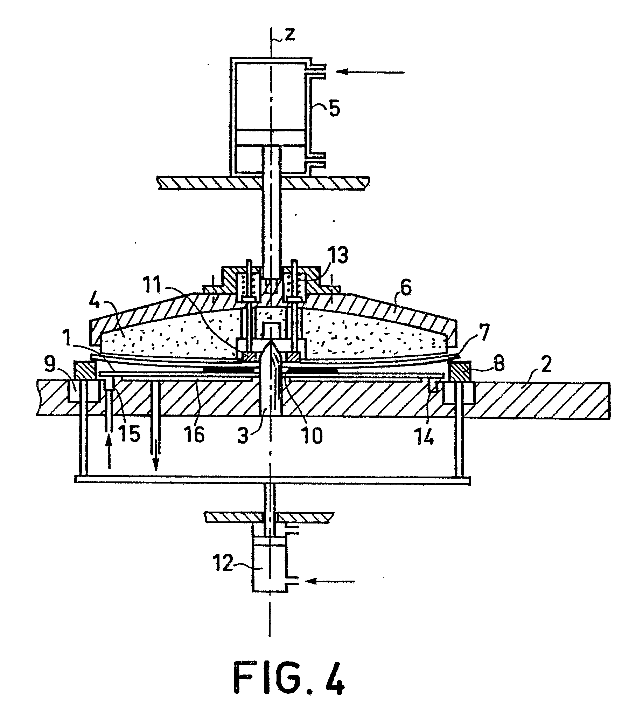

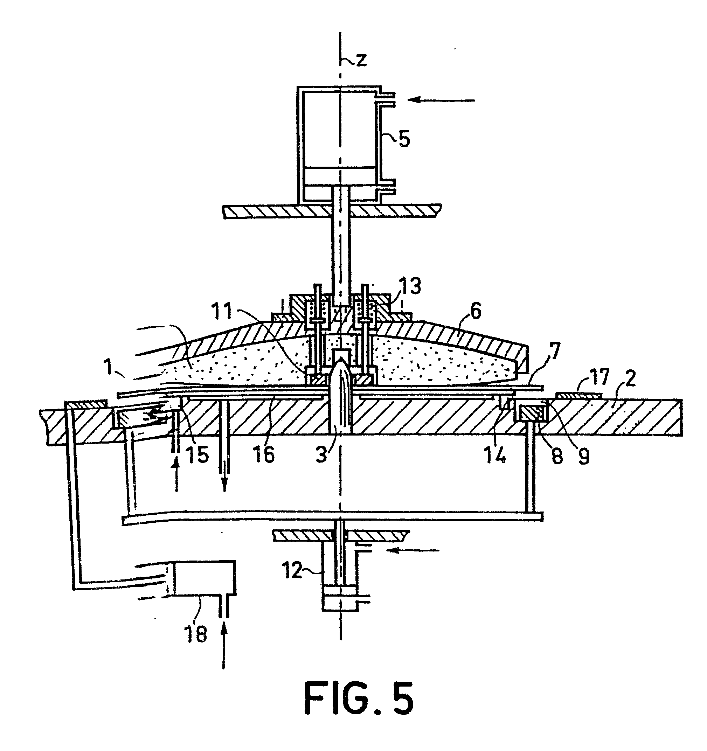

Le vérin 5 commande alors la descente du coussin 4 selon l'axe Z. La couronne 8 qui est rétractable dans une gorge 9 ménagée dans le plateau 2, par exemple au moyen d'un vérin 12 est à ce moment toujours en position haute. Lorsque le coussin descend, il plaque le substrat 7 en son centre de façon à écraser le bourrelet de résine 10. La couronne 8 provoque un galbage du substrat visible sur la figure 4 illustrant le début de la phase d'étalement. A partir de ce moment, le coussin commence à se déformer à partir de sa partie centrale en refoulant la résine vers l'extérieur. Au-fur-et-à-mesure, la couronne d'appui 8 s'efface progressivement en diminuant la courbure du substrat jusqu'à aplatissement total de celui-ci dans le plan de la matrice. La fin de cette phase d'étalement est illustrée sur la figure 5. A ce stade, la face du coussin en contact avec le substrat est devenue plane et assure une pression uniforme sur toute la surface de ce dernier. Le mouvement du coussin assure, en plus d'un laminage de la résine, une bonne répartition radiale de celle-ci sur toute la surface utile du disque. Un anneau central de pressage 11 placé dans une cavité du coussin et sollicité par des ressorts 13 est prévu pour exercer un appui au centre du disque et assurer en coopération avec la couronne 8 les positionnements relatifs des deux disques pendant toute la durée de la phase d'étalement. L'anneau 11 permet en outre d'empêcher le cheminement de la résine vers la broche centrale. Cet anneau, d'un diamètre extérieur légèrement inférieur au diamètre minimal d'inscription, entre en fonction dès le début de la phase d'étalement et refoule ainsi la résine vers l'extérieur. Un défaut de répartition de résine entre cet anneau 11 et la broche centrale 3 est sans influence, puisque cette zone n'est pas utile. A la fin de cette phase, un temps de repos est nécessaire afin de permettre au surplus de résine éventuel de s'écouler vers l'extérieur de la matrice. Cet excédent de résine s'écoule dans la gorge 9. Une fente périphérique 14 est ménagée dans le plateau au voisinage de la matrice et débouche dans une rainure circulaire 15 ou règne une légère surpression, de façon à chasser la résine vers la gorge 9 et à l'empêcher de pénétrer dans la chambre de dépression 16 située entre le plateau 2 et le disque 1.

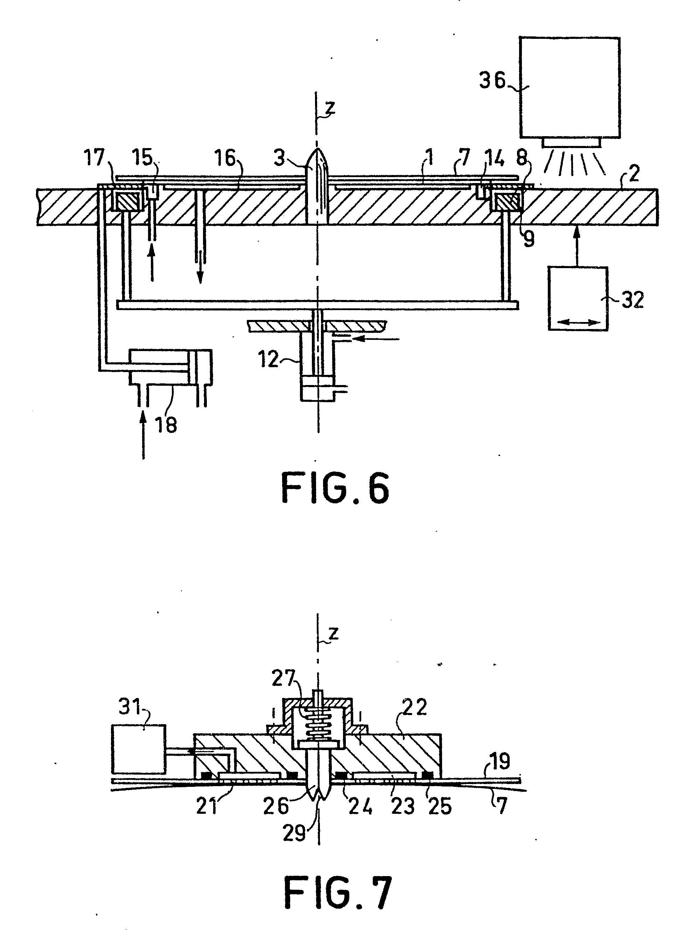

Après le temps de repos mentionné, le coussin remonte et le chariot 32 actionne le plateau 2 porteur des disques 1 et 7 et le déplace sous une lampe à ultra-violets 36, comme représenté sur la figure 6. En même temps, un écran de masquage 17 mobile radialement, par un vérin 18 par exemple, protège de l'insolation l'excédent de résine contenu dans la gorge 9. La vitesse de déplacement des disques sous la lampe 36 et la distance entre ces disques et la lampe sont choisis de façon appropriée en fonction de la nature de la résine utilisée pour obtenir un durcissement par polymérisation de cette résine à travers le disque transparent 7. Puis l'écran 17 est retiré et la couronne d'appui 8 remonte sous l'action du vérin 12 de façon à provoquer le décollement du substrat 7 sur lequel adhère la résine. Pour faciliter ce décollement, il peut être envisagé, après la polymérisation, de placer à nouveau les disques 1 et 7 sous le coussin 4 et d'actionner ce coussin de façon à exercer un appui au centre du disque afin d'empêcher que le disque 1 ne se soulève de son support 2 si le dispositif de dépression 30 n'est pas suffisang pour le maintenir.

A titre indicatif, le vérin 5 exerce une force d'environ 400 kg. Le dispositif permet le moulage de disques semi-rigides, d'épaisseur 1,5 millimètres environ, très régulière de façon à éviter tout problème d'abérration dans le système optique d'enregistrement-lecture, et de diamètre, par exemple, de 35 cm. Le dispenseur de résine 33 dépose de l'ordre de 3 à 4 cm³ de résine. A la fin de l'opération de copie, la couche de résine a une épaisseur d'environ 10 microns, celle-ci dépend notamment de la pression exercée par le vérin 5 et de la vitesse de celui-ci. On aura intérêt à prévoir deux vitesses de fonctionnement: une vitesse rapide pour l'approche du vérin jusqu'à ce que celui-ci affleure le bourrelet de résine, puis une vitesse beaucoup plus lente liée à la viscosité de la résine de façon à éviter les bulles pendant l'étalement.

Une variante de l'appareil ci-dessus décrit consiste à inverser les natures des disques 1 et 7. Cette variante est rendue nécessaire lorsque le substrat est trop rigide pour subir une flexion, par exemple lorsque ce disque est constitué de verre, ce qui est le cas notamment pour les applications des disques vidéo pour l'informatique. Dans ce cas bien sûr la résine n'est pas du même type que dans le cas de substrat en plastique. Le substrat rigide, constituant alors le disque 1, est prositionné autour de la broche 3. Le disque original constituant le disque 7 doit être flexible, par exemple constitué en nickel de 400 microns d'épaisseur.

Une autre variante de l'invention concerne le cas où le substrat est souple, c'est-à-dire que son épaisseur est beaucoup plus faible que dans le cas précédent, par exemple environ 150 microns. Dans ce cas, il est utile d'assurer une certaine rigidité pour éviter les plis. La figure 7 représente dans la première phase de réalisation le substrat 7 proté par sa ventouse 22. On utilise un support intercalaire 19 de diamètre correspondant à celui du disque, par exemple en matière plastique transparente que l'on place entre la ventouse 22 et le substrat 7. L'intercalaire 19 est perforé de petits trous 21 dans une zone annulaire comprise par exemple entre 50 et 200 millimètres. Ces trous servent à l'aspiration du substrat sur l'intercalaire par le dispositif de dépression 31. Un jeu entre les trous axiaux de l'intercalaire 19 et du substrat 7 facilite le transfert de ces deux disques lors de la dépose sur la couronne d'appui 8. Le substrat suspendu sous la ventouse présente une légère flèche dûe au poids de la partie de substrat non soumise à la dépression. Cette flèche n'a pas d'influence lors de la descente vers la couronne d'appui 8, elle disparait à son contact. Lors de l'étalement, l'intercalaire 19 permet un léger glissement par rapport au substrat, ce qui évite la formation de plis, facilite le laminage et la répartition de la résine entre matrice et substrat.

## Revendications

1. Dispositif de moulage de disques porteurs d'informations sous la forme de micro-reliefs superficiels de type vidéo et constitués d'un disque substrat et d'une couche de résine portant des micro-reliefs, mettant en œuvre l'étalement d'un bourrelet de résine fluide (10) entre un disque matrice gravé et le disque substrat, comprenant des moyens (33) permettant de déposer ce bourrelet de résine au centre de l'un des disques, des moyens d'étalement (4, 6) de la résine permettant d'appliquer le deuxième disque (7) flexible contre la résine, ce deuxième disque étant tout d'abord galbé puis aplati progressivement contre le premier (1) en chassant la résine (10) vers la périphérie selon un front circulaire, des moyens (36) permettant de durcir la couche de résine ainsi formée entre les deux disques, et des moyens d'appui pour la périphérie du deuxième disque (7) en forme de couronne (8) de diamètre intérieur supérieur au diamètre extérieur du premier disque (1), le deuxième disque (7) ayant un diamètre extérieur supérieur au diamètre intérieur de la couronne; les moyens d'étalement comprenant un élément élastique déformable (4) exerçant une poussée progressive sur le deuxième disque, cet élément déformable (4) étant situé du côté opposé au premier disque (1) par rapport au deuxième (7) et mobile dans une direction (Z), perpendiculaire au premier disque; ce premier disque étant disposé sur un plateau (2); caractérisé en ce qu'il comprend en outre d'une part une gorge (9) pratiquée dans le plateau (2) recevant les moyens d'appui en forme de couronne (8) de manière à rendre ceux-ci mobiles suivant la direction (Z) perpendiculaire au plan du premier disque (1), ces moyens d'appui donnant la forme initiale galbée, au deuxième disque (7), la gorge étant disposée au regard de la couronne (8) pour laisser ladite couronne s'effacer progressivement au fur et à mesure de l'application du deuxième disque (7) contre le premier (1), enfin à permettre la séparation des disques après durcissement de la résine; d'autre part un anneau central (11) solidaire dudit élément élastique (4), ce dernier constitué d'un coussin en mousse alvéolaire ayant une face d'appui sur le deuxième disque (7) convexe à l'état libre, l'anneau central (11) de diamètre inférieur à celui de la couronne de résine (10) exerçant un pinçage d'appui de façon à assurer les positionnements relatifs des deux disques (1, 7) pendant toute la durée de la phase d'étalement et en ce que ledit coussin élastique (4) des moyens d'appui exerce la poussée progressive sur le deuxième disque (7) en débutant dans la zone du bourrelet de résine (10) puis en s'étendant vers la périphérie au fur et à mesure de l'effacement des moyens d'appui (4).

2. Dispositif selon la revendication 1, caractérisé en ce qu'il comprend en outre, associé audit plateau (2), un dispositif d'aspiration (30) assurant le maintien du premier disque.

3. Dispositif selon la revendication 1, caractérisé en ce que ladite gorge (9) dans laquelle s'effacent les moyens d'appui (8) recueille un excès éventuel de résine.

4. Dispositif selon la revendication 1, caractérisé en ce que la résine étant photo-polymérisable, il comprend en outre une lampe ultra-violette (36) assurant la polymérisation de la résine, le deuxième disque étant perméable aux rayonnements ultra-violets.

5. Dispositif selon la revendication 4, caractérisé en ce qu'il comprend en outre un écran de masquage (17) mobile latéralement permettant de masquer la gorge (9) lors de l'insolation.

6. Dispositif selon l'une quelconque des revendications 1 à 5, caractérisé en ce que le premier disque (1) est le disque original et le deuxième (7) est un substrat vierge pré-découpé et perforé en son centre d'un trou de mêmes dimensions et tolérances que celui du disque original.

7. Dispositif selon la revendication 6, caractérisé en ce que le substrat (7) est semi-rigide.

## Patentansprüche

1. Vorrichtung zum Formen von Informationsträgerscheiben in Form von Oberflächenmikroreliefs des Videotyps, bestehend aus einer Trägerschichtscheibe und einer die Mikroreliefs tragenden Harzschicht, unter Ausbreitung eines Flüssigharz-Wulstes (10) zwischen einer gravierten Matrizenscheibe und der Trägerschichtscheibe, mit Mitteln (33) zum Aufbringen dieses Harzwulstes in der Mitte einer der Scheiben, mit Mitteln (4, 6) zum Ausbreiten des Harzes, um das Anbringen der zweiten flexiblen Scheibe (7) auf dem Harz zu ermöglichen, wobei diese zweite Scheibe zunächst gewölbt und sodann progressiv auf der ersten Scheibe (1) unter Herausquetschung des Harzes (10) in Umfangsrichtung, längs eines kreisförmigen Randes, abgeflacht wird, und mit Mitteln (36) zum Härten der so zwischen den beiden Scheiben geformten Harzschicht, sowie mit Mitteln in Form eines Kranzes (8) zum Abstützen des Umfanges der zweiten Scheibe (7), wobei dieser Kranz einen Innendurchmesser besitzt, der kleiner ist als der Außendurchmesser der ersten Scheibe (1), und der Außendurchmesser der zweiten Scheibe (7) größer ist als der Innendurchmesser des Kranzes, während die Ausbreitmittel ein elastisch verformbares Element (4) aufweisen, das auf die zweite Scheibe einen progressiven Druck ausübt und auf der in bezug auf die zweite Scheibe (7) entgegengesetzten Seite der ersten Scheibe (1) angeordnet und ferner in einer zur ersten Scheibe senkrechten Richtung (Z) beweglich ist, und wobei diese erste Scheibe auf einer Platte (2) angeordnet ist, dadurch gekennzeichnet, daß sie ferner einerseits eine in die Platte (2) eingearbeitete Auskehlung (9) aufweist, die die kranzförmigen Abstützmittel (8) derart aufnimmt, daß die letzteren in zur Ebene der ersten Scheibe (1) senkrechter Richtung (Z) beweglich sind, wobei diese Abstützmittel der zweiten Scheibe (7) die ursprüngliche, gewölbte Form verleihen und die Auskehlung dem Kranz (8) gegenüberliegt, so daß der letztere beim Aufbringen der zweiten Scheibe (7) auf die erste Scheibe (1) fortschreitend ausweichen kann und die Trennung der beiden Scheiben nach dem Erhärten des Harzes ermöglicht wird, während die Vorrichtung andererseits ferner einen mit dem elastischen Element (4) verbundenen Mittelring (11) aufweist und dieses aus einem porösen Schaumstoff bestehende elastische Element eine im unbelasteten Zustand konvexe, auf der zweiten Scheibe (7) abstützbare Fläche besitzt, wobei der einen kleineren Durchmesser als der Harzkranz (10) besitzende Mittelring (11) eine Abstützklemmung bewirkt, um während des gesamten Ausbreitungsvorgangs die gegenseitige Lage der beiden Scheiben (1, 7) zu sichern, und daß das elastische Kissen (4) der Abstützmittel den progressiven Druck auf die zweite Scheibe (7) ausgehend von der Harzwulstzone (10) und nach Maßgabe des Ausweichens der Abstützmittel (4) zum Umfang fortschreitend ausübt.

2. Vorrichtung nach Anspruch 1, dadurch gekennzeichnet, daß sie ferner eine der Platte (2) beigeordnete, die erste Scheibe haltende Saugvorrichtung (30) aufweist.

3. Vorrichtung nach Anspruch 1, dadurch gekennzeichnet, daß die Auskehlung (9), in welche die Abstützmittel (8) ausweichen, etwaigen Harzüberschuß aufnimmt.

4. Vorrichtung nach Anspruch 1, dadurch gekennzeichnet, daß das Harz lichtpolymerisationsfähig ist, und daß sie ferner eine die Polymerisation des Harzes bewirkende Ultraviolettlampe (36) aufweist, wobei die zweite Scheibe für die Ultraviolettstrahlung durchlässig ist.

5. Vorrichtung nach Anspruch 4, dadurch gekennzeichnet, daß sie ferner einen seitlich beweglichen Schutzschirm (17) aufweist, der es ermöglicht, die Auskehlung (9) während der Bestrahlung abzudecken.

6. Vorrichtung nach einem der Ansprüche 1 bis 5, dadurch gekennzeichnet, daß die erste Scheibe (1) die Originalscheibe ist, während die zweite Scheibe (7) eine vorgeschnittene, blanke Trägerschicht ist, die in ihrer Mitte eine Bohrung aufweist, deren Abmessungen und Toleranzen die gleichen sind wie diejenigen der Originalscheibe.

7. Vorrichtung nach Anspruch 6, dadurch gekennzeichnet, daß die Trägerschicht (7) halbsteif ist.

**Claims**

1. Device for moulding data-bearing discs in the form of video type superficial micro-protruding parts and constituted by a substrate disc and a layer of resin bearing micro-protruding parts, operating the spreading out of a fluid resin bead (10) between an engraved matrix disc and the substrate disc, comprising means (33) allowing to dispose this resin bead in the centre of one of the discs, spreading means (4, 6) of the resin allowing to apply the second flexible disc (7) against the resin, this second disc being firstly curved then flattened progressively against the first (1) by urging the resin (10) towards the periphery according to a circular front, means (36) allowing to harden the resin layer thus formed between the two discs, and bearing means for the periphery of the second disc (7), in the form of a ring (8) of an internal diameter superior to the external diameter of the first disc (1), the second disc (7) having an external diameter superior to the internal diameter of the ring; the spreading means comprising a deformable elastic element (4) exercising a progressive thrust on the second disc, this deformable element (4) being positioned on the side opposite the first disc (1) with respect to the second (7) and mobile in one direction (Z), perpendicular to the first disc; this first disc being disposed on a plate (2); characterized in that it comprises, among others, on the one hand, a groove (9) realized within the plate (2) receiving the bearing means in the form of a ring (8) in such a way as to render them mobile along the direction (Z) perpendicular to the plane of the first disc (1), these bearing means giving the initial curved shape, to the second disc (7), the groove being disposed opposite the ring (8) in order to let the said ring disappear progressively during the application of the second disc (7) against the first (1), in order to allow the separation of the discs after hardening of the resin; on the other hand, a central ring (11) integral with the said elastic element (4), this latter constituted by a cushion in cellular foam having a bearing face on the second convex disc (7) in the free state, the central ring (11) having a diameter inferior to that of the resin ring (10) and exerting a bearing pinching in a manner so as to ensure the realtive positionings of the two discs (1, 7) throughout the entire spreading phase and in that the said elastic cushion (4) of the bearing means exerts the progressive thrust on the second disc (7) while beginning in the zone of the resin bead (10) then in extending towards the periphery progressively with the disappearance of the bearing means (8).

2. Device according to claim 1, characterized in that it comprises among others, associated to the plate (2), an aspiration device (30) maintaining the first disc.

3. Device according to claim 1, characterized in that the said groove (9) in which the bearing means (8) disappears receives an eventual excess of resin.

4. Device according to claim 1, characterized in that the resin being photo-polymerizable, it comprises moreover an ultra-violet lamp (36) ensuring the polymerization of the resin, the second disc being permeable to ultra-violet rays.

5. Device according to claim 4, characterized in that it moreover comprises a masking screen (17) laterally mobile allowing to mask the groove (9) during radiation.

6. Device according to any one of claims 1 to 5, characterized in that the first disc (1) is the original disc and the second (7) is a pre-cut blank substrate perforated at its centre by a hole having the same dimensions and tolerances as that of the original disc.

7. Device according to claim 6, characterized in that the substrate (7) is semi-rigid.

FIG.1

FIG.2

# FIG. 3

# FIG. 4

# FIG. 5

FIG.6

FIG.7